# EUROPEAN PATENT SPECIFICATION

(11) **EP 3 336 799 B1**
(45) Date of publication and mention of the grant of the patent: **12.02.2020**
(21) Application number: 17208596.1
(22) Date of filing: 19.12.2017
(51) Int. Cl.: G06T 5/50, G06T 7/30, G06T 7/33, G06T 7/73

(54) **IMAGE PROCESSING APPARATUS AND IMAGE PROCESSING METHOD COMBINING VIEWS OF THE SAME SUBJECT TAKEN AT DIFFERENT RANGES**
BILDVERARBEITUNGSVORRICHTUNG UND BILDVERARBEITUNGSVERFAHREN ZUM KOMBINIEREN VON BLICKWINKEL DES SELBEN GEGENSTANDES, DIE AUS VERSCHIEDENER ENTFERNUNG GENOMMEN WURDEN
APPAREIL ET PROCÉDÉ DE TRAITEMENT D'IMAGES COMBINANT DES VUES D'UN MÊME SUJET PRISES À DES DISTANCES DIFFÉRENTES

(30) Priority: 19.12.2016 JP 2016245750
(43) Date of publication of application: 20.06.2018
(73) Proprietor: Hitachi-LG Data Storage, Inc., Tokyo 108-0022 (JP)
(72) Inventor: NONAKA, Yuuichi, Tokyo, 100-8280 (JP); WATANABE, Akinobu, Tokyo, 100-8280 (JP); KAMIMURA, Toshio, Tokyo, 100-8280 (JP); MIMATSU, Yasuyuki, Tokyo, 100-8280 (JP)
(74) Representative: MERH-IP Matias Erny Reichl Hoffmann Patentanwälte PartG mbB

(56) References cited:
- WO-A1-2014/154839
- HA YEONGMIN ET AL: "3D registration of multi-view depth data for hand-arm pose estimation", 2014 11TH INTERNATIONAL CONFERENCE ON UBIQUITOUS ROBOTS AND AMBIENT INTELLIGENCE (URAI), IEEE, 12 November 2014 (2014-11-12), pages 653-657, XP032744452, DOI: 10.1109/URAI.2014.7057488 [retrieved on 2015-03-09]
- PALASEK PETAR ET AL: "A flexible calibration method of multiple Kinects for 3D human reconstruction", 2015 IEEE INTERNATIONAL CONFERENCE ON MULTIMEDIA & EXPO WORKSHOPS (ICMEW), IEEE, 29 June 2015 (2015-06-29), pages 1-4, XP033182514, DOI: 10.1109/ICMEW.2015.7169829 [retrieved on 2015-07-28]

## Description

### BACKGROUND

### Technical Field

The present invention relates to an image processing apparatus and an image processing method.

### Related Art

Japanese Patent Application Publication No. 2014-130519 states that "[A] medical information processing system, a medical information processing apparatus, and a medical image diagnosis apparatus capable of facilitating input of information into an electronic health record are provided." and "[T]he medical information processing system includes obtaining means, extraction means, selection means, and display control means. The obtaining means obtains motion information containing information on the positions of joints of a target individual whose motion is to be captured. The extraction means extracts an affected part of the target individual based on the information on the positions of the joints in the motion information on the target individual obtained by the obtaining means. The selection means selects related information related to the affected part extracted by the extraction means. The display control means performs control such that the related information selected by the selection means will be displayed on a display unit."

Japanese Patent Application Publication No. 2014-21816 states that "[A]n image recognition apparatus capable of accurately recognizing motions of a person imaged by a range image sensor within its angle of view, and an elevator apparatus including this image recognition apparatus are provided." and "From a range image in which a part of a body is outside the angle of view (AOV), the amount of characteristics in motion in the state where the part of the body is outside the angle of view is extracted. Further, the amount of characteristics in motion which would be obtained in a state where the body were within the angle of view is estimated using the amount of characteristics in motion in the state where the part of the body is outside the angle of view and the amount by which the body is outside the angle of view. Even when a part of a person's body is outside the angle of view of a range image, it is possible to obtain an amount of characteristics in motion close to that in a situation where the person's body is within the angle of view of the range image. Thus, image recognition with improved reliability can be achieved."

WO 2014/154 839 A1 discloses a high-definition 3D camera device capable of allowing tracking objects at near and far distances as well as tracking at the same time large and small objects.

Furthermore, Non-Patent Literature: Ha Yeonmin et al., "3D registration of multi-view depth data for hand-arm pose estimation", discloses an outlier rejection method, which uses skeletal consistency, is capable of reducing the computation time of a 3D registration process without a loss of robustness.

### SUMMARY OF THE INVENTION

In recent years, range image sensors have been actively applied to various fields. Range image sensors are capable of obtaining three-dimensional position information in real time, and attempts have been made to use them in human behavior analysis . Here, in human behavior analysis using range images, there is a need for simultaneously figuring out information on a motion of the whole body of the subject (like a motion in a bird's eye view), such as where the person is or moves (wholeness), and information on a small motion of a certain part of the subject, such as what task is being performed with the hands or feet of the person. However, neither of Patent Literature 1 and Patent Literature 2 mentioned above discloses a configuration taking such a need into consideration.

An object of the present invention is to provide an image processing apparatus according to claim 1 and an image processing method according to claim 6 capable of simultaneously figuring out information on a motion of the whole body of a subject and information on a small motion of a certain part of the subject by using range images obtained by imaging the subject.

An aspect of the present invention is an image processing apparatus including a first-part-information obtaining part configured to obtain first part information from a first range image obtained by imaging a first area of a subject, the first part information being information on a part of the subject, a second-part-information obtaining part configured to obtain second part information from a second range image obtained by imaging a second area of the subject smaller than the first area, the second part information being information on a part of the subject, a transformation-function generation part configured to find a transformation function based on the first part information and the second part information, the transformation function being a function that performs coordinate transformation between a first coordinate system in the first part information and a second coordinate system in the second part information, and a combined-part-information generation part configured to generate combined part information based on the transformation function, the combined part information being information representing the first part information and the second part information in a common coordinate system.

Other problems disclosed by the present application and solutions thereto will be apparent from the section of the description of embodiments and the drawings.

According to the present invention, it is possible to simultaneously figure out information on a motion of the whole body of a subject and information on a small motion of a certain part of the subject by using range images obtained by imaging the subject. The description is defined by the appended claims.

### BRIEF DESCRIPTION OF THE DRAWINGS

Fig. 1 is a diagram illustrating the configuration of an image processing system in a first embodiment.
Fig. 2 illustrates an example of an information processing apparatus for configuring an image processing apparatus and a determination apparatus.
Fig. 3 is a diagram explaining first part information.
Fig. 4 is a diagram explaining second part information.
Fig. 5 is a diagram explaining how to find a transformation function.
Fig. 6 is a diagram explaining combined part information. 210582EP
Fig. 7 is a diagram illustrating the configuration of an image processing system in a second embodiment.
Fig. 8 is a diagram illustrating the configuration of an image processing system in a third embodiment.
Fig. 9 is a diagram illustrating the configuration of an image processing system in a fourth embodiment.

### DETAILED DESCRIPTION OF THE INVENTION

Embodiments will be described below. In the following description, identical or like components are denoted by identical reference signs, and redundant description thereof may be omitted.

### First Embodiment

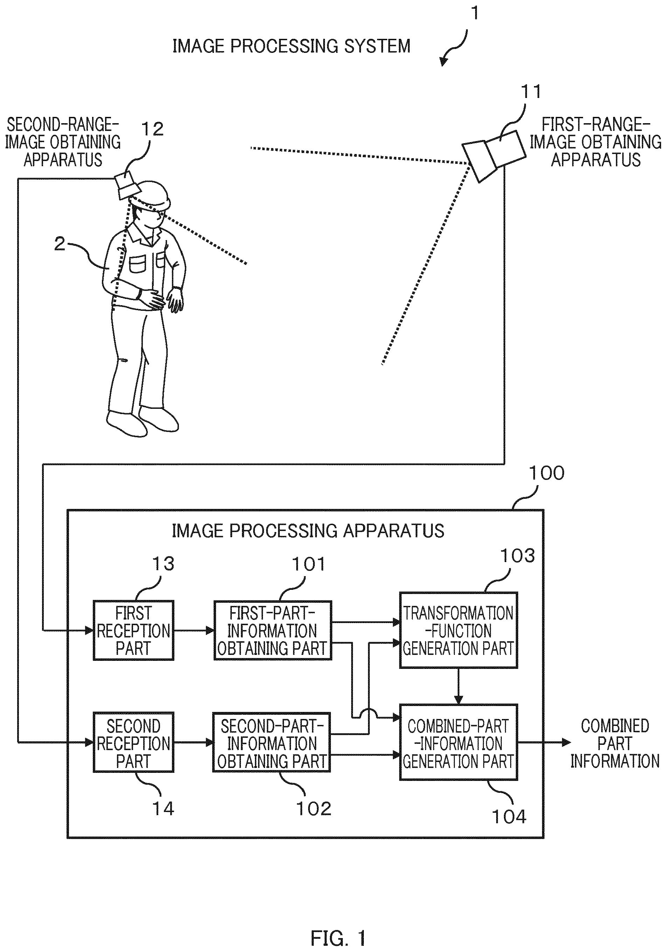

Fig. 1 illustrates a schematic configuration of an image processing system 1 to be presented as a first embodiment. As illustrated in Fig. 1, the image processing system 1 includes a first-range-image obtaining apparatus 11, a second-range-image obtaining apparatus 12, and an image processing apparatus 100. Note that in the following description, the first-range-image obtaining apparatus 11 and the second-range-image obtaining apparatus 12 may be referred to collectively as "range-image obtaining apparatus(es)" as appropriate.

Each of the range-image obtaining apparatuses obtains a range image (depth image, range image data) which is data containing three-dimensional position information (such as distance information (depth information) or distance signals) on a subject (target object). The range image contains, for example, pixel information (such as information on gradation and color tone) and distance information obtained on a pixel-by-pixel basis. Examples of the range-image obtaining apparatus include a time-of-flight (TOF) camera, a stereo camera, a laser radar (LIDAR: Laser Imaging Detection and Ranging), a millimeter-wave radar, an infrared depth sensor, an ultrasonic sensor, and the like.

Each range-image obtaining apparatus includes a wired or wireless communication unit (such as a local area network (LAN) interface, a universal serial bus (USB) interface, or a wireless communication module) for communicating with the image processing apparatus 100. The range-image obtaining apparatus sends a range image in a compressed format or in an uncompressed format to the image processing apparatus 100 through this communication unit.

As illustrated in Fig. 1, the installation position, imaging direction, imaging area, and the like of the first-range-image obtaining apparatus 11 are set such that the first-range-image obtaining apparatus 11 obtains a range image of a first area covering the whole body (whole) of a person 2 who is the subject and the background behind him or her (hereinafter, referred to as the first range image). On the other hand, the installation position, imaging direction, imaging area, and the like of the second-range-image obtaining apparatus 12 are set such that the second-range-image obtaining apparatus 12 obtains a range image of an area of the person 2 smaller than the first area (second area) (hereinafter, referred to as the second range image) . The second range image, obtained by the second-range-image obtaining apparatus 12, contains detailed information on a certain body part of the person 2. The second-range-image obtaining apparatus 12 is provided at a position close to the person 2 and may be provided, for example, on an item the person 2 is wearing (such as a helmet).

The image processing apparatus 100 is configured using an information processing apparatus and, for example, performs various kinds of image processing on the range images inputted from the range-image obtaining apparatuses, obtains information on the parts of the subject (such as the skeleton, joints, and outline) (hereinafter, referred to as the part information) contained in the range images sent from the range-image obtaining apparatuses, and generates combined part information which is information combining the part information obtained from the first range image and the part information obtained from the second range image.

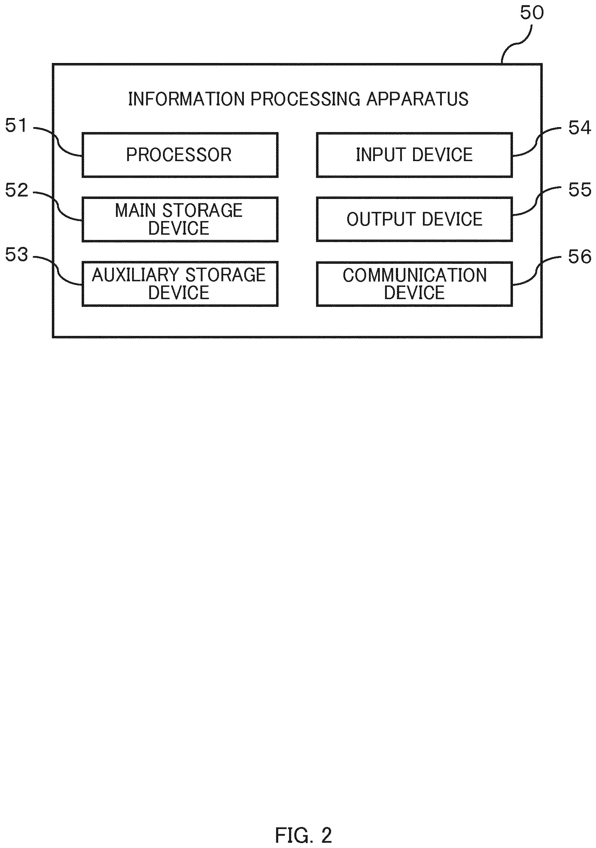

Fig. 2 illustrates an example of the information processing apparatus for configuring the image processing apparatus 100. As illustrated in Fig. 2, an information processing apparatus 50 includes a processor 51, a main storage device 52, an auxiliary storage device 53, an input device 54, an output device 55, and a communication device 56. These are communicatively coupled to each other through a communication component such as a bus.

The processor 51 is configured using, for example, a central processing unit (CPU), a micro processing unit (MPU), a graphics processing unit (GPU), a digital signal processor (DSP), or the like is used. The processor 51 implements all or some of the functions of the image processing apparatus 100 by reading and executing a program stored in the main storage device 52. The main storage device 52 is, for example, a read only memory (ROM), a random access memory (RAM), a non-volatile semiconductor memory (non-volatile RAM (NVRAM)), or the like and stores programs and data.

The auxiliary storage device 53 is, for example, a hard disk drive, a solid state drive (SSD), an optical storage device (such as a compact disc (CD) or a digital versatile disc (DVD)), a storage system, a device for reading and writing a record medium such as an IC card, an SD memory card, or an optical record medium, or the like. Programs and data stored in the auxiliary storage device 53 are loaded to the main storage device 52 as needed. The auxiliary storage device 53 may be configured independently of the image processing apparatus 100 like a network storage, for example.

The input device 54 is a user interface that receives external inputs and is, for example, a keyboard, a mouse, a touchscreen, and/or the like. The output device 55 is a user interface that outputs various kinds of information such as the courses of processes and the results of processes and is, for example, an image display device (such as a liquid crystal monitor, a liquid crystal display (LCD), and a graphics card), a printing device, and/or the like. Note that the image processing apparatus 100 may be configured to, for example, receive external inputs through the communication device 56. Also, the image processing apparatus 100 may be configured to, for example, output various kinds of information such as the courses of process and the results of processes through the communication device 56.

The communication device 56 is a wired or wireless communication interface that enables communication with other apparatuses and devices and is, for example, a network interface card (NIC), a wireless communication module, or the like.

As illustrated in Fig. 1, the image processing apparatus 100 includes functions of a first reception part 13, a first-part-information obtaining part 101, a second reception part 14, a second-part-information obtaining part 102, a transformation-function generation part 103, and a combined-part-information generation part 104. These functions are implemented by, for example, causing the processor 51 of the image processing apparatus 100 to read and execute a program stored in the main storage device 52 or the auxiliary storage device 53. Also, these functions are implemented by, for example, hardware included in the image processing apparatus 100 (such as a field-programmable gate array (FPGA) or an application specific integrated circuit (ASIC)). Note that besides these functions, the image processing apparatus 100 may include, for example, an operating system, device drivers, a database management system (DBMS), and so on.

Among the functions listed above, the first reception part 13 receives the first range image, which is sent from the first-range-image obtaining apparatus 11. The second reception part 14 receives the second range image, which is sent from the second-range-image obtaining apparatus 12. Note that the first reception part 13 and the second reception part 14 may be configured independently of the image processing apparatus 100.

The first-part-information obtaining part 101 obtains part information on the person 2 from the first range image obtained by the first-range-image obtaining apparatus 11, and generates first part information containing the obtained content. The first-part-information obtaining part 101 obtains the first part information through, for example, skeleton detection, outline detection, joint detection, and the like. The first part information contains information indicating the positions of parts represented in a first coordinate system.

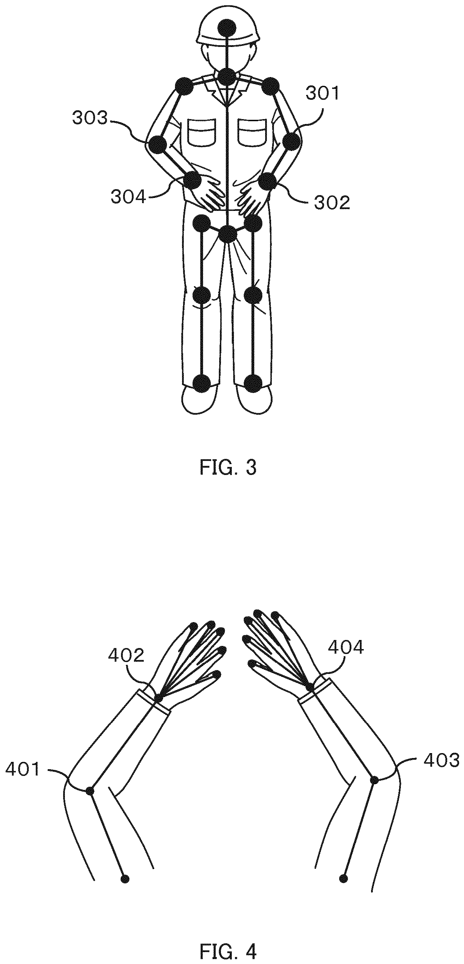

Fig. 3 illustrates an example (illustrative diagram) of the first part information. As illustrated in Fig. 3, this first part information contains skeleton information on the whole (whole body) of the person 2.

The second-part-information obtaining part 102 obtains part information on the person 2 from the second range image obtained by the second-range-image obtaining apparatus 12, and generates second part information containing the obtained content. The second-part-information obtaining part 102 obtains the second part information through, for example, skeleton detection, outline detection, joint detection, and the like. The second part information contains information indicating the positions of parts represented in a second coordinate system.

Fig. 4 illustrates an example (illustrative diagram) of the second part information. As illustrated in Fig. 4, the exemplarily illustrated second part information contains skeleton information on the arms to the fingertips of the person 2.

The transformation-function generation part 103 finds a transformation function based on the first part information and the second part information, the transformation function being a function that performs coordinate transformation between the three-dimensional first coordinate system in the first part information and the three-dimensional second coordinate system in the second part information.

More specifically, the transformation-function generation part 103 first identifies the correspondence between the parts contained in the first part information and the parts contained in the second part information. That is, the transformation-function generation part 103 identifies that certain one of the parts contained in the first part information and certain one of the parts contained in the second part information are the same part of the same person. For example, based on the first part information and the second part information, the transformation-function generation part 103 identifies the correspondence between joint parts 301 to 304 in Fig. 3 and joint parts 401 and 404 in Fig. 4, that is, identifies that these joint parts are the same parts of the same person. Here, examples of the method of the above identification include a method based on iterative closest point (ICP), a method utilizing characteristic points, and the like. The transformation-function generation part 103 then finds a transformation function by using the identified parts as a reference, the transformation function being a function that performs coordinate transformation between the first coordinate system and the second coordinate system.

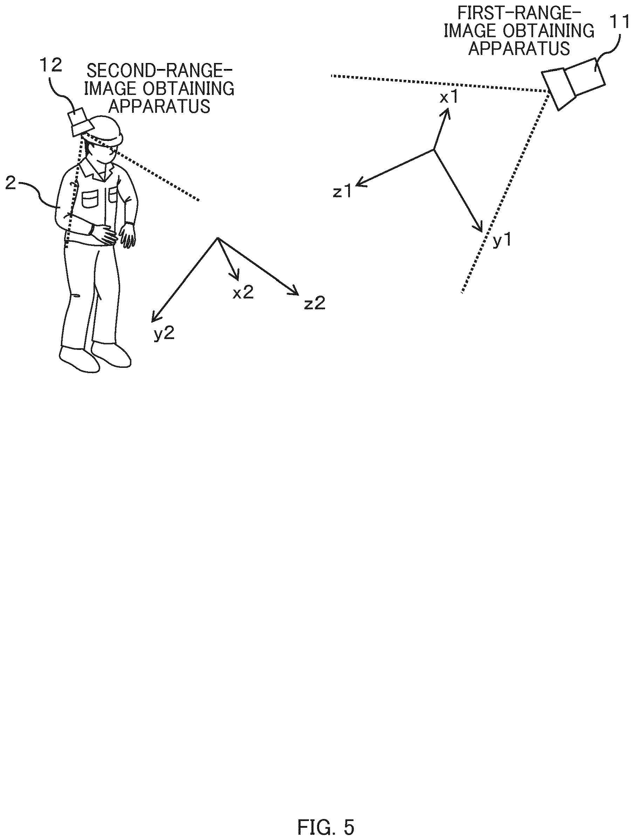

How to find the transformation function will be described with reference to Fig. 5. As illustrated in Fig. 5, the parts contained in the first range image, obtained by the first-range-image obtaining apparatus 11, are represented in the first coordinate system (x1, y1, z1), whereas the parts contained in the second range image, obtained by the second-range-image obtaining apparatus 12, are represented in the second coordinate system (x2, y2, z2). In this case, the transformation function is a function that converts positional coordinates represented in the second coordinate system (x2, y2, z2) into positional coordinates in the first coordinate system (x1, y1, z1). Here, assume for example that the joint part 301 (x1a, y1a, z1a), the joint part 302 (x1b, y1b, z1b), the joint part 303 (x1c, y1c, z1c), and the joint part 304 (x1d, y1d, z1d) in Fig. 3 are determined to correspond to the joint part 401 (x2a, y2a, z2a), the joint part 402 (x2b, y2b, z2b), the joint part 403 (x2c, y2c, z2c), and the joint part 404 (x2d, y2d, z2d) in Fig. 4 respectively (the joint part 301 corresponds to the joint part 401, the joint part 302 corresponds to the joint part 402, the joint part 303 corresponds to the joint part 403, and the joint part 304 corresponds to the joint part 404) . In this case, the transformation-function generation part 103 finds, as the transformation function, a function F(x, y, z) that satisfies the following.
(x1a, y1a, z1a) = F(x2a, y2a, z2a)
(x1b, y1b, z1b) = F(x2b, y2b, z2b)
(x1c, y1c, z1c) = F(x2c, y2c, z2c)
(x1d, y1d, z1d) = F(x2d, y2d, z2d)

Referring back to Fig. 1, the combined-part-information generation part 104 combines the first part information and the second part information by using the transformation function found by the transformation-function generation part 103 to generate combined part information which is information indicating the first part information and the second part information in the common coordinate system. Note that while the above function F (x, y, z) converts the second coordinate system into the first coordinate system, the coordinate system in the combined part information may be any one of the first coordinate system and the second coordinate system.

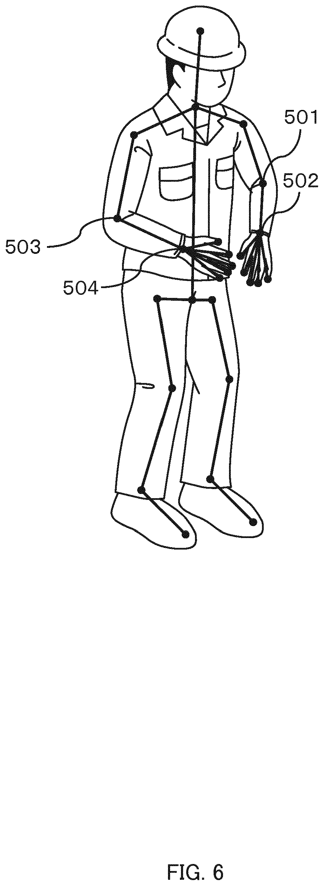

Fig. 6 illustrates combined part information (illustrative diagram) obtained by combining the first part information illustrated in Fig. 3 (skeleton information on the whole (whole body) of the person 2) and the second part information illustrated in Fig. 4 (skeleton information on the arms to the fingertips of the person 2). The combined-part-information generation part 104 generates the combined part information illustrated in Fig. 6 by coupling (jointing) the joint part 301 and the joint part 302 in Fig. 3 (first part information) and the joint part 401 and the joint part 402 in Fig. 4 (second part information) to each other and further coupling (jointing) the joint part 303 and the joint part 304 in Fig. 3 (first part information) and the joint part 403 and the joint part 404 in Fig. 4 (second part information) to each other.

The image processing apparatus 100, for example, generates time-series combined part information, which contains information indicating a motion of the person 2, based on time-series first range images and time-series second range images sequentially inputted from the first-range-image obtaining apparatus 11 and the second-range-image obtaining apparatus 12 respectively.

Note that the combined part information cannot be generated in a case where the number of corresponding parts contained in the first part information and the second part information is not enough to generate the combined part information (not enough to generate the transformation function) . In this case, the combined-part-information generation part 104, for example, generates combined part information by using one of the first part information and the second part information. In this way, the image processing apparatus 100 can always output combined part information. Note that, in this case, the image processing apparatus 100 may preferentially output one of the first part information and the second part information.

As described above, the image processing system 1 in this embodiment can generate information containing both of the information contained in the first range image, obtained by the first-range-image obtaining apparatus 11, and the information contained in the second range image, obtained by the second-range-image obtaining apparatus 12, as a single piece of combined part information. Hence, both of third-person perspective skeleton information on a motion of the whole body of the person 2 and first-person perspective skeleton information on a small motion of the hands and the fingers of the person 2 can be provided at the same time as a single piece of data represented in a common coordinate system. In this way, it is possible to simultaneously figure out, for example, information on a motion of the whole body of the person 2 (like his or her motion in a bird's eye view), such as where the person 2 is and where he or she moves to (wholeness), and information on a small motion of a certain body part of the person 2, such as what task is being performed with the hands or feet of the person 2.

Moreover, in the image processing system 1 in this embodiment, the role of each range-image obtaining apparatus is limited (the first-range-image obtaining apparatus 11 only obtains information on a motion of the whole body of the person 2, whereas the second-range-image obtaining apparatus 12 only obtains information on a small motion of the hands and the fingers of the person 2). Thus, neither of the range-image obtaining apparatuses necessarily has to be a high-performance apparatus (such as one with high resolution or one with a wide angle of view), which makes it possible to provide the image processing system 1 at low cost. In addition, since neither of the range-image obtaining apparatuses is required to have high resolution, the amount of information processed by the image processing system 1 is reduced, which makes it possible to reduce the processing load and increase the processing speed.

It is to be noted that the installation states (installation position, imaging direction, and imaging area) of the first-range-image obtaining apparatus 11 and the second-range-image obtaining apparatus 12 are not necessarily limited to the states described above. For example, both or one of the first-range-image obtaining apparatus 11 and the second-range-image obtaining apparatus 12 may be installed on a mobile object. Also, the roles of the first-range-image obtaining apparatus 11 and the second-range-image obtaining apparatus 12 may be switched by time of day.

Moreover, the above description has taken the example where the second-range-image obtaining apparatus 12 obtains information on a small motion of the hands of the person 2. However, the second-range-image obtaining apparatus 12 may obtain information on a small motion of other parts of the person 2, such for example as his or her feet. The image processing system 1 in this embodiment is therefore widely applicable to various situations.

### Second Embodiment

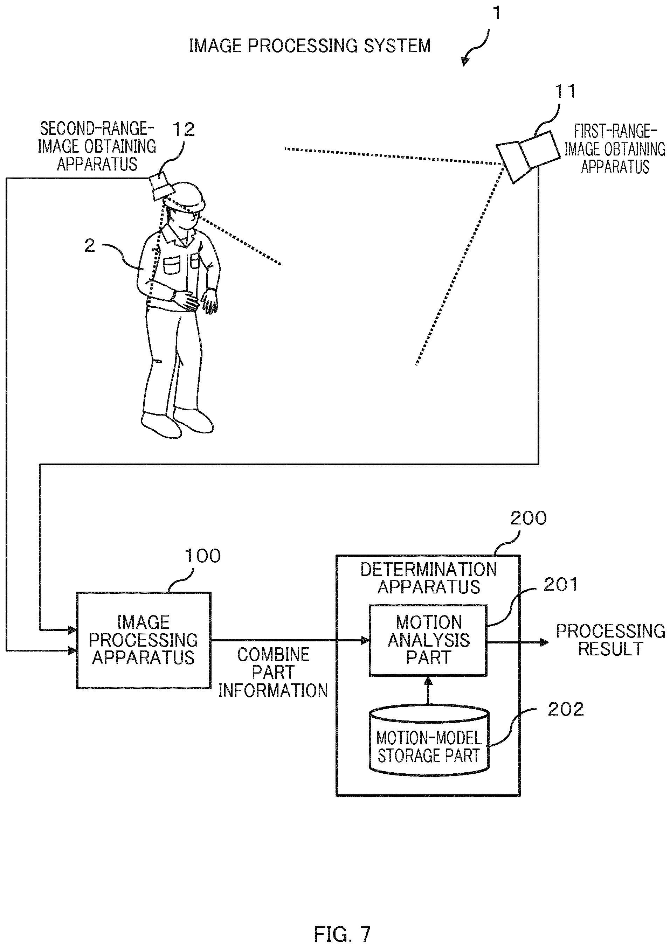

Fig. 7 illustrates the configuration of an image processing system 1 to be presented as a second embodiment. The image processing system 1 in the second embodiment includes a configuration similar to that of the image processing system 1 in the first embodiment and further includes a determination apparatus 200 that identifies a motion of a person 2 and determines whether or not the motion of the person 2 is normal, based on combined part information outputted from the image processing apparatus 100. The determination apparatus 200 is configured using, for example, hardware similar to that of the information processing apparatus 50, illustrated in Fig. 2. Note that the determination apparatus 200 may be configured as a part of the image processing apparatus 100. The other components of the image processing system 1 in the second embodiment are similar to those of the image processing system 1 in the first embodiment.

As illustrated in Fig. 7, the determination apparatus 200 includes functions of a motion analysis part 201 and a motion-model storage part 202. These functions are implemented by, for example, causing the processor of the determination apparatus 200 to read and execute a program stored in the main storage device or the auxiliary storage device of the determination apparatus 200. Also, these functions are implemented by, for example, hardware included in the determination apparatus 200 (such as an FPGA or an ASIC) . Note that besides these functions, the determination apparatus 200 may include, for example, an operating system, device drivers, a DBMS, and so on.

Among the functions listed above, the motion-model storage part 202 stores motion models each of which is information indicating a motion of a person as time-series part information.

Combined part information generated by the image processing apparatus 100 is inputted into the motion analysis part 201. Based on the combined part information, inputted from the image processing apparatus 100, and the motion models, stored in the motion-model storage part 202, the motion analysis part 201 identifies the motion of the person 2, determines whether or not the motion of the person 2 is normal, and outputs that result as a processing result.

The motion-model storage part 202, for example, stores motion models each indicating a motion of a person performing a task as time-series skeleton information. Then, the motion analysis part 201 identifies the task the person 2 is performing by comparing a characteristic amount obtained from the combined part information with each motion model, and outputs the identified result as a processing result.

Also, the motion-model storage part 202, for example, stores a motion model, generated by machine learning or the like, indicating a motion of a person normally performing a task as time-series skeleton information (hereinafter, referred to as the normal model), and a threshold to be used in determination of whether or not the task being performed by the person 2 is normal based on the normal model. The motion analysis part 201 then determines whether or not the task being performed by the person 2 is normal based on the normal model and the threshold by comparing a characteristic amount obtained from the combined part information with the normal model, and outputs the result of the determination as a processing result. Meanwhile, the determination apparatus 200 may output a warning (such as a warning display and/or a warning sound) to the person 2, a person around the person 2, or some other person if the motion analysis part 201 determines that the task being performed by the person 2 is not normal.

With the image processing system 1 in the second embodiment, a motion of the person 2 can be accurately identified and whether or not the motion of the person 2 is normal can be accurately determined based on combined part information, which contains information on a motion of the whole body of the person 2 and information on a small motion of a certain body part of the person 2. For example, a task being performed by a worker in a factory or the like (such as by which machine the worker is working and in what posture the worker is working) can be accurately identified. Also, for example, whether or not the task being performed by the worker is normal (such as whether or not the worker is performing a dangerous action) can be accurately determined. For example, information on whether the motion of the worker is deviating from the standard or whether the task is being delayed can be obtained. Also, for example, a motion of a care-receiver or patient in a nursing home, hospital, or the like can be accurately identified. Moreover, for example, whether or not a motion of the care-receiver or patient (for example, his or her action of getting up from a bed, his or her action while eating, or the like) is normal can be accurately determined. Also, for example, motions of a customer in a store or the like which customers come in and out of can be accurately identified, thus enabling a detailed analysis on customer behavior (such as what kinds of products they are interested in). Moreover, for example, whether or not a motion of a customer is normal (such as whether his or her behavior is suspicious) can be accurately determined.

Meanwhile, the above description has presented the case of using two range-image obtaining apparatuses (first-range-image obtaining apparatus 11 and second-range-image obtaining apparatus 12). However, more range-image obtaining apparatuses may be used. For example, by imaging the person 2 from a plurality of directions (for example, from front and behind), it is possible to more accurately figure out motion of the person 2 and more accurately determine whether or not the motion of the person 2 is normal. Also, in this case, the combined part information contains information obtained from range images sent from a plurality of range-image obtaining apparatuses differing from each other in installation position, imaging direction, imaging area, and the like. Hence, the characteristic amount can be set specifically from various perspectives. This makes it possible to accurately identify a motion of the person 2 and accurately determine whether or not the motion of the person 2 is normal.

### Third Embodiment

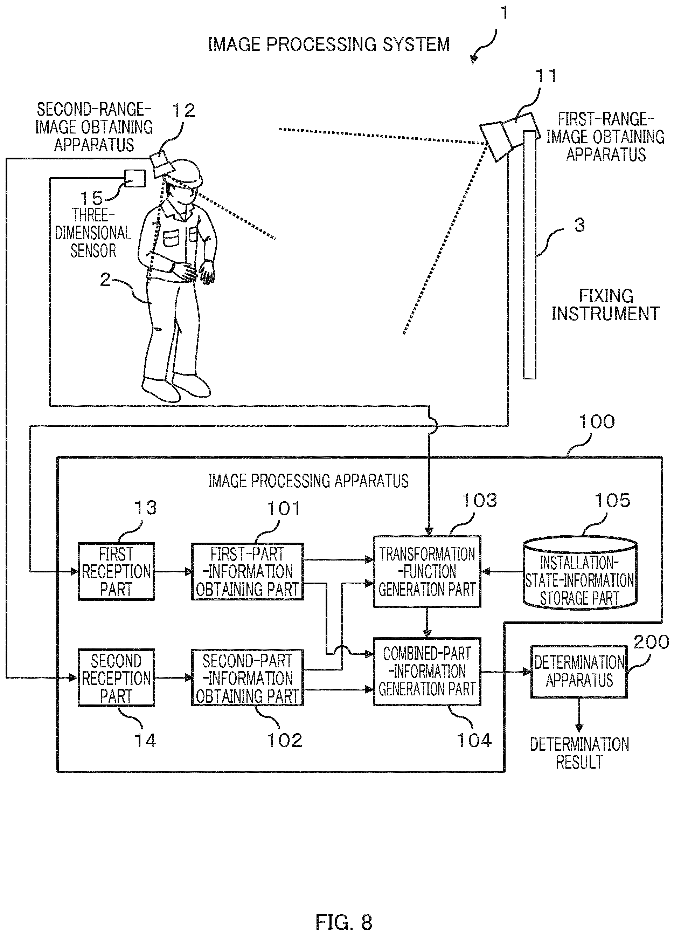

Fig. 8 illustrates the configuration of an image processing system 1 to be presented as a third embodiment. The image processing system 1 in the third embodiment is based on the configuration of the image processing system 1 in the second embodiment. A first-range-image obtaining apparatus 11 of the image processing system 1 in the third embodiment is fixed to an upper end portion of a fixing instrument 3 standing to a predetermined height from the floor surface. An image processing apparatus 100 in the third embodiment includes the configuration of the image processing apparatus 100 in the second embodiment and further includes an installation-state-information storage part 105. Also, a transformation-function generation part 103 of the image processing apparatus 100 in the third embodiment receives a measurement value (or measurement signal) sent from a three-dimensional sensor 15 attached to a person 2. The three-dimensional sensor 15 includes, for example, at least one of a tilt sensor, an acceleration sensor, a gyroscope, and an orientation sensor. The three-dimensional sensor 15 obtains information indicating the imaging direction of a second-range-image obtaining apparatus 12 (hereinafter, referred to as the second installation-state information), and sends the above-mentioned measurement value to the image processing apparatus 100. The three-dimensional sensor 15 is installed in such a manner that it can measure the state of the second-range-image obtaining apparatus 12. For example, the three-dimensional sensor 15 is directly put on the person 2 (for example, attached to a helmet) . Note that the other components of the image processing system 1 in the third embodiment are similar to those of the image processing system 1 in the second embodiment.

The installation-state-information storage part 105 stores information indicating the installation state (such as the height, the imaging direction, and the angle to the horizontal direction) of the first-range-image obtaining apparatus 11, which is installed on the fixing instrument 3 (hereinafter, referred to as the first installation-state information).

A transformation-function generation part 103, for example, finds the difference between the imaging direction of the first-range-image obtaining apparatus 11 and the imaging direction of the second-range-image obtaining apparatus 12 by comparing the installation-state information stored in the installation-state-information storage part 105 and the information inputted from the three-dimensional sensor 15, and calculates a transformation function by using the value (difference) thus found.

The image processing system 1 in the third embodiment can efficiently find the transformation function since the information indicating the installation state of a range-image obtaining apparatus has been stored in advance, as described above. Accordingly, the image processing system 1 in the third embodiment can efficiently generate the combined part information.

Meanwhile, the range-image obtaining apparatuses may be provided with, for example, a wide-angle lens or a telephoto lens. This improves the degree of freedom in installation of the range-image obtaining apparatuses. Note that in this case, the transformation-function generation part 103 generates the transformation function while using the difference in lens magnification as one parameter.

In the above description, the second-range-image obtaining apparatus 12 is attached to the person 2. However, as in the first-range-image obtaining apparatus 11, the second-range-image obtaining apparatus 12 may also be fixed to a fixing instrument standing to a predetermined height from the floor surface. In this case, for example, the relative angles of the first-range-image obtaining apparatus 11 and the second-range-image obtaining apparatus 12 are measured in advance to find the transformation function in advance, and this is stored in the installation-state-information storage part 105. In this way, the process of calculating the transformation function by the transformation-function generation part 103 can be omitted. Accordingly, the combined part information can be efficiently generated.

### Fourth Embodiment

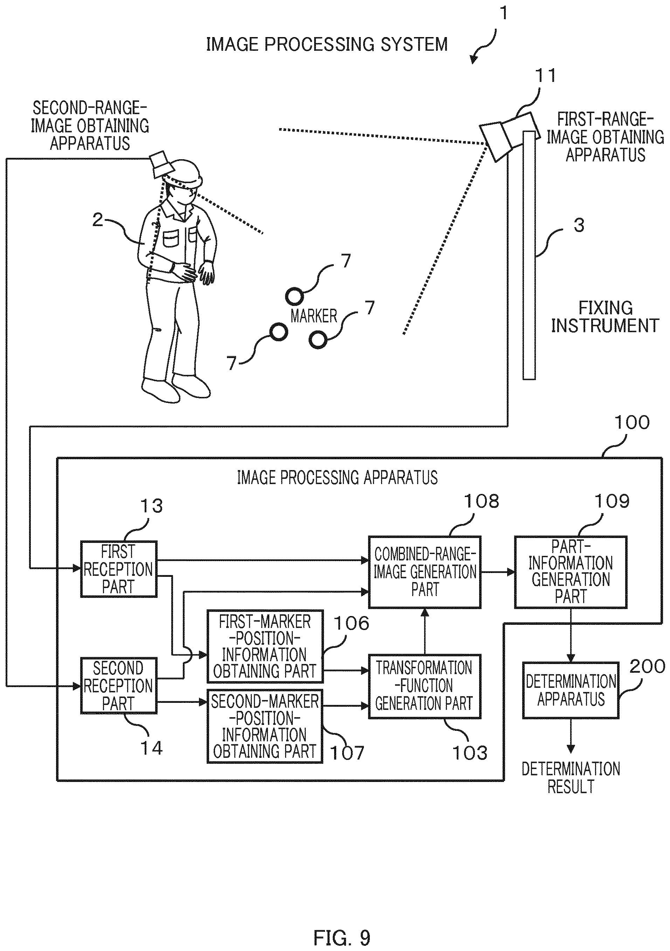

Fig. 9 illustrates the configuration of an image processing system 1 to be presented as a fourth embodiment. In the image processing system 1 in the fourth embodiment, its image processing apparatus 100 includes a first reception part 13, a second reception part 14, a first-marker-position-information obtaining part 106, a second-marker-position-information obtaining part 107, a transformation-function generation part 103, a combined-range-image generation part 108, and a part-information generation part 109. Among these, the configurations of the first reception part 13 and the second reception part 14 are similar to those in the third embodiment. Moreover, the configuration of a determination apparatus 200 of the image processing system 1 in the fourth embodiment is similar to that in the third embodiment. Furthermore, as in the third embodiment, a first-range-image obtaining apparatus 11 is fixed to an upper end portion of a fixing instrument 3 standing to a predetermined height from the floor surface. The image processing system 1 presented as the fourth embodiment includes one or more markers 7 fixedly installed at predetermined positions around a person 2.

From a first range image obtained by the first-range-image obtaining apparatus 11, the first-marker-position-information obtaining part 106 obtains information indicating the positions of the markers 7 in the three-dimensional coordinate system in the first range image (hereinafter, referred to as the first marker-position information).

From a second range image obtained by a second-range-image obtaining apparatus 12, the second-marker-position-information obtaining part 107 obtains information indicating the positions of the markers 7 in the three-dimensional coordinate system in the second range image (hereinafter, referred to as the second marker-position information).

The transformation-function generation part 103 finds a transformation function based on the first marker-position information and the second marker-position information. Here, in the first embodiment, the transformation function is found by identifying the correspondence between the parts (joint parts) contained in the first range image and the parts (joint parts) contained in the second range image. However, in the fourth embodiment, the transformation-function generation part 103 finds the transformation function by using, as a reference, the position information on the same markers 7 contained in both of the first range image and the second range image, instead of the position information on the parts (joint parts). Hence, the fourth embodiment does not need the identification of the correspondence between parts unlike the first embodiment. Accordingly, the transformation-function generation part 103 can efficiently find the transformation function.

Here, in the first embodiment, the transformation function is found using body parts (joint parts) of the person 2 as a reference. Thus, errors will be large if the motion of the person 2 is large. However, in the fourth embodiment, the transformation function is found based on the positions of the markers 7, whose installation positions remain unchanged. Thus, an accurate transformation function can be found even if the motion of the person 2 is large. Note that the accuracy of the transformation function can be further improved by, for example, increasing the number of markers 7 installed and, for example, using the average of the parameters of transformation functions found based on the respective markers 7.

By using the transformation function thus found, the combined-range-image generation part 108 generates information combining the first range image inputted from the first reception part 13 and the second range image inputted from the second reception part 14 as data indicating the first range image and the second range image in the common coordinate system (for example, the three-dimensional coordinate system in the first range image or the three-dimensional coordinate system in the second range image) (hereinafter, referred to as the combined range image).

Meanwhile, in the generation of the combined range image, the combined-range-image generation part 108 may, for example, compare the first range image and the second range image on a pixel-by-pixel basis and preferentially employ pixels with higher resolution (for example, pixels obtained by imaging the person 2 from a closer position) . In this way, it is possible to, for example, generate a combined range image containing both of information on a specific part of the person 2 obtained from the second-range-image obtaining apparatus 12 and information on the whole body of the person 2 obtained from the first-range-image obtaining apparatus 11.

Also, if, for example, only one of the first range image and the second range image contains information on the markers 7, the range image containing the information on the markers 7 may be employed in the generation of the combined range image. In this way, the image processing apparatus 100 can continue outputting a combined range image even if, for example, the person 2 moves to a position far from the markers 7.

The part-information generation part 109 detects parts of the person 2 in the combined range image, generates information of the parts of the person 2 (hereinafter, referred to as the part information), and inputs the generated part information to the determination apparatus 200. Note that the configuration and the function of the determination apparatus 200 are similar to those of the determination apparatus 200 in the third embodiment.

As described above, the image processing system 1 in the fourth embodiment can find an accurate transformation function by using the positions of the markers 7 as a reference. Moreover, the image processing apparatus 100 (part-information generation part 109) can efficiently generate the part information since it detects the part information from a single combined range image.

Although some embodiments of the present invention have been described above, it is needless to say that the present invention is not limited to these embodiments but various modifications are possible without departing from the gist of the present invention. For example, the above embodiments have been described in detail in order to comprehensibly describe the present invention, and the present invention is not limited to one entirely including any of the configurations described above. Moreover, some components in each of the above-described embodiments may be added, deleted, or replaced with other components.

Also, some or all of the above-described components, functional parts, processing parts, processing means, and the like may be implemented with hardware by, for example, designing them with integrated circuits. Also, the above-described components, functions, and the like may be implemented with software by causing a processor to interpret and execute a program that implements their functions. The information of the program, tables, files, and the like that implement the functions can be stored in a record device such as a memory, a hard disk drive, or a solid state drive (SSD) or in a record medium such as an IC card, an SD card, or a DVD.

Also, in the above-mentioned drawings, the control lines and the information lines represent lines that are considered necessary for description, and do not necessarily represent all control lines and information lines involved in implementation. For example, in practice, almost all components may be considered coupled to each other.

Also, the arrangement of the various functional parts, processing parts, and databases in each above-described image processing system 1 is a mere example. The arrangement of the various functional parts, processing parts, and databases is changeable to an arrangement that is optimum in view of the performance, processing efficiency, communication efficiency, and the like of the hardware and software included in the image processing system 1.

Also, the configuration (such as the schema) of the databases mentioned above is flexibly changeable in view of efficient use of a resource, improvement of processing efficiency, improvement of access efficiency, improvement of search efficiency, and the like.

Also, a method may be employed in which, for example, a digital still camera, a surveillance camera, or the like is used for each of the range-image obtaining apparatuses, and the distance to the subject and his or her skeleton information are estimated by performing image processing on images obtained by the range-image obtaining apparatuses. In this case, two-dimensional image signals are the processing target, and therefore the computation load can be kept low.

Also, while the cases where the subject is the person 2 have been described above, the subject may be, for example, an animal or an inanimate object.

## Claims

1. An image processing apparatus comprising:
a first-part-information obtaining part (101) configured to obtain first part information from a first range image obtained by imaging a first area of a subject, the first part information being information on a part of the subject;
a second-part-information obtaining part (102) configured to obtain second part information from a second range image obtained by imaging a second area of the subject smaller than the first area, the second part information being information on a part of the subject;
a transformation-function generation part (103) configured to find a transformation function based on the first part information and the second part information, the transformation function being a function that performs coordinate transformation between a first coordinate system in the first part information and a second coordinate system in the second part information; and
a combined-part-information generation part (104) configured to generate combined part information based on the transformation function, the combined part information being information representing the first part information and the second part information in a common coordinate system, wherein the image processing apparatus is further comprising:
a first reception part (13) configured to receive the first range image, sent from a first-range-image obtaining apparatus (11); and
a second reception part (14) configured to receive the second range image, sent from a second-range-image obtaining apparatus (12), wherein
the first range image obtaining apparatus is fixed to an upper end portion of a fixing instrument standing to a predetermined height from the floor surface,
**characterized in that**:
the second-range-image obtaining apparatus is mounted on an item so that when the subject is wearing the item the first area is an area covering a whole body of the subject, and the second area is an area covering a body part of the subject, wherein the subject is a person.

2. The image processing apparatus (100) according to claim 1, wherein
the transformation-function generation part (103) is configured to obtain first installation-state information indicating an installation position of a range-image obtaining apparatus that obtains the first range image, and second installation-state information (12) indicating an installation position of a range-image obtaining apparatus that obtains the second range image, and the transformation-function generation part (103) is configured to find the transformation function based on the first installation-state information and the second installation-state information (12).

3. The image processing apparatus (100) according to claim 2, further comprising:
an installation-state-information storage part (105) configured to store at least one of the first installation-state information and the second installation-state information (12).

4. The image processing apparatus (100) according to claim 1, further comprising:
a motion-model storage part (202) configured to store a motion model representing a motion of the subject as time-series part information; and
a motion analysis part configured to identify a motion of the subject by comparing the combined part information with the motion model.

5. The image processing apparatus (100) according to claim 1, further comprising:
a motion-model storage part (202) configured to store a normal model which is a motion model representing a normal motion of the subject as time-series part information; and
a motion analysis part configured to determine whether or not a motion of the subject is normal, by comparing the combined part information with the normal model.

6. An image processing method comprising:
causing an information processing apparatus to obtain first part information from a first range image obtained by imaging a first area of a subject, the first part information being information on a part of the subject;
causing the information processing apparatus to obtain second part information from a second range image obtained by imaging a second area of the subject smaller than the first area, the second part information being information on a part of the subject;
causing the information processing apparatus to find a transformation function based on the first part information and the second part information, the transformation function being a function that performs coordinate transformation between a first coordinate system in the first part information and a second coordinate system in the second part information; and
causing the information processing apparatus to generate combined part information based on the transformation function, the combined part information being information representing the first part information and the second part information in a common coordinate system, wherein the image processing method is further comprising:
causing a first reception part (13) to receive the first range image, sent from a first-range-image obtaining apparatus (11); and
causing a second reception part (14) to receive the second range image, sent from a second-range-image obtaining apparatus (12), wherein
the first range image obtaining apparatus is fixed to an upper end portion of a fixing instrument standing to a predetermined height from the floor surface,
**characterized in that**:
the second-range-image obtaining apparatus is mounted on an item that the is wearing, and wherein
the subject is a person, the first area is an area covering a whole body of the person, and the second area is an area covering a body part of the person.

7. The image processing method according to claim 6, further comprising:
causing the information processing apparatus to obtain first installation-state information indicating an installation position of a range-image obtaining apparatus that obtains the first range image, and second installation-state information (12) indicating an installation position of a range-image obtaining apparatus that obtains the second range image, and find the transformation function based on the first installation-state information and the second installation-state information (12).

## Patentansprüche

1. Bildverarbeitungsvorrichtung, die Folgendes umfasst:
einen Erhalteteil (101) für Informationen über einen ersten Teil, der konfiguriert ist, Informationen über einen ersten Teil aus einem ersten Entfernungsbild zu erhalten, das durch Abbilden eines ersten Bereichs eines Objekts gewonnen wird, wobei die Informationen über einen ersten Teil Informationen über einen Teil des Objekts sind;
einen Erhalteteil (102) für Informationen über einen zweiten Teil, der konfiguriert ist, Informationen über einen zweiten Teil aus einem zweiten Entfernungsbild zu erhalten, das durch Abbilden eines zweiten Bereichs des Objekts, der kleiner als der erste Bereich ist, gewonnen wird, wobei die Informationen über einen zweiten Teil Informationen über einen Teil des Objekts sind;
einen Erzeugungsteil (103) einer Transformationsfunktion, der konfiguriert ist, auf der Grundlage der Informationen über den ersten Teil und der Informationen über den zweiten Teil eine Transformationsfunktion zu finden, wobei die Transformationsfunktion eine Funktion ist, die eine Koordinatentransformation zwischen einem ersten Koordinatensystem in den Informationen über den ersten Teil und einem zweiten Koordinatensystem in den Informationen über den zweiten Teil durchführt, und
einen Erzeugungsteil (104) von Informationen über einen zusammengesetzten Teil, der konfiguriert ist, Informationen über einen zusammengesetzten Teil auf der Grundlage der Transformationsfunktion zu erzeugen, wobei die Informationen über einen zusammengesetzten Teil Informationen sind, die die Informationen über einen ersten Teil und die Informationen über einen zweiten Teil in einem gemeinsamen Koordinatensystem repräsentieren, wobei die Bildverarbeitungsvorrichtung ferner Folgendes umfasst:
einen ersten Empfangsteil (13), der konfiguriert ist, das erste Entfernungsbild zu empfangen, das von einer Erhaltevorrichtung (11) eines ersten Entfernungsbilds gesendet wird, und
einen zweiten Empfangsteil (14), der konfiguriert ist, das zweite Entfernungsbild zu empfangen, das von einer Erhaltevorrichtung (12) eines zweiten Entfernungsbilds gesendet wird, wobei
die Erhaltevorrichtung eines ersten Entfernungsbilds an einem Abschnitt am oberen Ende eines Befestigungsinstruments, das mit einer vorbestimmten Höhe von der Bodenoberfläche steht, befestigt ist,
**dadurch gekennzeichnet, dass**:
die Erhaltevorrichtung eines zweiten Entfernungsbilds auf einen Gegenstand montiert ist, so dass dann, wenn das Objekt den Gegenstand trägt, der erste Bereich ein Bereich ist, der einen ganzen Körper des Objekts abdeckt, und der zweite Bereich ein Bereich ist, der einen Körperteil des Objekts abdeckt, wobei das Objekt eine Person ist.

2. Bildverarbeitungsvorrichtung (100) nach Anspruch 1, wobei
der Erzeugungsteil (103) einer Transformationsfunktion konfiguriert ist, Informationen über einen ersten Aufstellungszustand, der eine Aufstellungsposition einer Erhaltevorrichtung eines Entfernungsbilds, die das erste Entfernungsbild gewinnt, angibt, und Informationen (12) über einen zweiten Aufstellungszustand, der eine Aufstellungsposition einer Erhaltevorrichtung eines Entfernungsbilds, die das zweite Entfernungsbild gewinnt, angibt, zu erhalten, und der Erzeugungsteil (103) einer Transformationsfunktion konfiguriert ist, die Transformationsfunktion auf der Grundlage der Informationen über den ersten Aufstellungszustand und den Informationen (12) über den zweiten Aufstellungszustand zu finden.

3. Bildverarbeitungsvorrichtung (100) nach Anspruch 2, die ferner Folgendes umfasst:
einen Teil (105) zum Speichern der Informationen über den Aufstellungszustand, um die Informationen über den ersten Aufstellungszustand und/oder die Informationen (12) über den zweiten Aufstellungszustand zu speichern.

4. Bildverarbeitungsvorrichtung (100) nach Anspruch 1, die ferner Folgendes umfasst:
einen Teil (202) zum Speichern eines Bewegungsmodells, der konfiguriert ist, ein Bewegungsmodell zu speichern, das eine Bewegung des Objekts als Zeitreiheninformationen über ein Teil repräsentiert, und
einen Bewegungsanalyseteil, der konfiguriert ist, eine Bewegung des Objekts zu identifizieren, indem die Informationen über einen zusammengesetzten Teil mit dem Bewegungsmodell verglichen werden.

5. Bildverarbeitungsvorrichtung (100) nach Anspruch 1, die ferner Folgendes umfasst:
einen Teil (202) zum Speichern eines Bewegungsmodells, der konfiguriert ist, ein normales Modell zu speichern, das ein Bewegungsmodell ist, das eine normale Bewegung des Objekts als Zeitreiheninformationen über ein Teil repräsentiert, und
einen Bewegungsanalyseteil, der konfiguriert ist, zu bestimmen, ob eine Bewegung des Objekts normal ist oder nicht, indem die Informationen über einen zusammengesetzten Teil mit dem normalen Modell verglichen werden.

6. Bildverarbeitungsverfahren, das Folgendes umfasst:
Bewirken, dass eine Informationsverarbeitungsvorrichtung Informationen über einen ersten Teil aus einem ersten Entfernungsbild gewinnt, das durch Abbilden eines ersten Bereichs eines Objekts gewonnen wird, wobei die Informationen über einen ersten Teil Informationen über einen Teil des Objekts sind;
Bewirken, dass die Informationsverarbeitungsvorrichtung Informationen über einen zweiten Teil aus einem zweiten Entfernungsbild gewinnt, das durch Abbilden eines zweiten Bereichs des Objekts, der kleiner als der erste Bereich ist, gewonnen wird, wobei die Informationen über einen zweiten Teil Informationen über einen Teil des Objekts sind;
Bewirken, dass die Informationsverarbeitungsvorrichtung auf der Grundlage der Informationen über den ersten Teil und der Informationen über den zweiten Teil eine Transformationsfunktion findet, wobei die Transformationsfunktion eine Funktion ist, die eine Koordinatentransformation zwischen einem ersten Koordinatensystem in den Informationen über den ersten Teil und einem zweiten Koordinatensystem in den Informationen über den zweiten Teil durchführt, und
Bewirken, dass die Informationsverarbeitungsvorrichtung Informationen über einen zusammengesetzten Teil auf der Grundlage der Transformationsfunktion erzeugt, wobei die Informationen über einen zusammengesetzten Teil Informationen sind, die die Informationen über einen ersten Teil und die Informationen über einen zweiten Teil in einem gemeinsamen Koordinatensystem repräsentieren, wobei das Bildverarbeitungsverfahren ferner Folgendes umfasst:
Bewirken, dass ein erster Empfangsteil (13) das erste Entfernungsbild empfängt, das von einer Erhaltevorrichtung (11) eines ersten Entfernungsbilds gesendet wird, und
Bewirken, dass ein zweiter Empfangsteil (14) das zweite Entfernungsbild empfängt, das von einer Erhaltevorrichtung (12) eines zweiten Entfernungsbilds gesendet wird, wobei
die Erhaltevorrichtung eines ersten Entfernungsbilds an einem Abschnitt am oberen Ende eines Befestigungsinstruments, das mit einer vorbestimmten Höhe von der Bodenoberfläche steht, befestigt ist,
**dadurch gekennzeichnet, dass**:
die Erhaltevorrichtung eines zweiten Entfernungsbilds an einem Gegenstand montiert ist, den das Objekt trägt, wobei
das Objekt eine Person ist, der erste Bereich ein Bereich ist, der einen ganzen Körper der Person abdeckt, und der zweite Bereich ein Bereich ist, der einen Körperteil der Person abdeckt.

7. Bildverarbeitungsverfahren nach Anspruch 6, das ferner Folgendes umfasst:
Bewirken, dass die Informationsverarbeitungsvorrichtung Informationen über einen ersten Aufstellungszustand, der eine Aufstellungsposition einer Erhaltevorrichtung eines Entfernungsbilds, die das erste Entfernungsbild gewinnt, angibt, und Informationen (12) über einen zweiten Aufstellungszustand, der eine Aufstellungsposition einer Erhaltevorrichtung eines Entfernungsbilds, die das zweite Entfernungsbild gewinnt, angibt, gewinnt und die Transformationsfunktion auf der Grundlage der Informationen über den ersten Aufstellungszustand und den Informationen (12) über den zweiten Aufstellungszustand findet.

## Revendications

1. Appareil de traitement d'images comprenant :
une partie d'obtention de premières informations partielles (101) configurée pour obtenir des premières informations partielles depuis une image de première portée obtenue en prenant une image d'une première zone d'un sujet, les premières informations partielles étant des informations sur une partie du sujet ;
une partie d'obtention de secondes informations partielles (102) configurée pour obtenir des secondes informations partielles depuis une image de seconde portée obtenue en prenant une image d'une seconde zone du sujet plus petite que la première zone, les secondes informations partielles étant des informations sur une partie du sujet ;
une partie de génération de fonction de transformation (102) configurée pour trouver une fonction de transformation sur la base des premières informations partielles et des secondes informations partielles, la fonction de transformation étant une fonction qui effectue une transformation de coordonnées entre un premier système de coordonnées dans les premières informations partielles et un second système de coordonnées dans les secondes informations partielles ; et
une partie de génération d'informations partielles combinées (104) configurée pour générer des informations partielles combinées sur la base de la fonction de transformation, les informations partielles combinées étant des informations représentant les premières informations partielles et les secondes informations partielles dans un système de coordonnées commun,
dans lequel l'appareil de traitement d'images comprend en outre :
une première partie de réception (13) configurée pour recevoir l'image de première portée, envoyée depuis un appareil d'obtention d'image de première portée (11) ; et
une seconde partie de réception (14) configurée pour recevoir l'image de seconde portée, envoyée depuis un appareil d'obtention d'image de seconde portée (12), dans lequel
l'appareil d'obtention d'image de première portée est fixé sur une portion terminale supérieure d'un instrument de fixation dressé à une hauteur prédéterminée depuis la surface du sol,
**caractérisé en ce que**
l'appareil d'obtention d'image de seconde portée est monté sur un objet de telle sorte que lorsque le sujet porte l'objet, la première zone est une zone couvrant un corps entier du sujet, et la seconde zone est une zone couvrant une partie du corps du sujet, le sujet étant une personne.

2. Appareil de traitement d'image (100) selon la revendication 1, dans lequel la partie de génération de fonction de transformation (103) est configurée pour obtenir des premières informations d'état d'installation indiquant une position d'installation d'un appareil d'obtention d'image de portée qui obtient l'image de première portée et des secondes informations d'état d'installation (12) indiquant une position d'installation d'un appareil d'obtention d'image de portée qui obtient l'image de seconde portée, et la partie de génération de fonction de transformation (103) est configurée pour trouver la fonction de transformation sur la base des premières informations d'état d'installation et des secondes informations d'état d'installation (12).

3. Appareil de traitement d'image (100) selon la revendication 2, comprenant en outre :
une partie de stockage d'informations d'état d'installation (105) configurée pour stocker au moins une parmi les premières informations d'état d'installation et les secondes informations d'état d'installation (12).

4. Appareil de traitement d'image (100) selon la revendication 1, comprenant en outre :
une partie de stockage de modèle de mouvement (202) configurée pour stocker un modèle de mouvement représentant un mouvement du sujet sous forme d'informations partielles en série temporelle ; et
une partie d'analyse de mouvement configurée pour identifier un mouvement du sujet en comparant les informations partielles combinées avec le modèle de mouvement.

5. Appareil de traitement d'image (100) selon la revendication 1, comprenant en outre :
une partie de stockage de modèle de mouvement (202) configurée pour stocker un modèle normal qui est un modèle de mouvement représentant un mouvement normal du sujet sous forme d'informations partielles en série temporelle ; et
une partie d'analyse de mouvement configurée pour déterminer si un mouvement du sujet est normal ou non, en comparant les informations partielles combinées avec le modèle normal.

6. Procédé de traitement d'image comprenant les étapes consistant à :
amener un appareil de traitement d'information à obtenir des premières informations partielles depuis une image de première portée obtenue en prenant l'image d'une première zone d'un sujet, les premières informations partielles étant des informations sur une partie du sujet ;
amener l'appareil de traitement d'information à obtenir des secondes informations partielles depuis une image de seconde portée obtenue en prenant l'image d'une seconde zone du sujet plus petite que la première zone, les secondes informations partielles étant des informations sur une partie du sujet ;
amener l'appareil de traitement d'information à trouver une fonction de transformation basée sur les premières informations partielles et les secondes informations partielles, la fonction de transformation étant une fonction qui effectue une transformation de coordonnées entre un premier système de coordonnées dans les premières informations partielles et un second système de coordonnées dans les secondes informations partielles ; et
amener l'appareil de traitement d'information à générer des informations partielles combinées sur la base de la fonction de transformation, les informations partielles combinées étant des informations représentant les premières informations partielles et les secondes informations partielles dans un système de coordonnées commun,
dans lequel le procédé de traitement d'image comprend en outre les étapes consistant à :
amener une première partie de réception (13) à recevoir l'image de première portée, envoyée depuis un appareil d'obtention d'image de première portée ; et
amener une seconde portion de réception (14) à recevoir l'image de seconde portée, envoyée depuis un appareil d'obtention d'image de seconde portée (12), dans lequel
l'appareil d'obtention d'image de première portée est fixé sur une portion terminale supérieure d'un instrument de fixation dressé à une hauteur prédéterminée depuis la surface du sol,
**caractérisé en ce que** :
l'appareil d'obtention d'image de seconde portée est monté sur un objet qui est porté, et dans lequel
le sujet est une personne, la première zone est une zone couvrant un corps entier de la personne, et la seconde zone est une zone couvrant une partie du corps de la personne.

7. Procédé de traitement d'images selon la revendication 6, comprenant en outre les étapes consistant à :
amener l'appareil de traitement d'information à obtenir des premières informations d'état d'installation indiquant une position d'installation d'un appareil d'obtention d'image de portée qui obtient l'image de première portée, et des secondes informations d'état d'installation (12) indiquant une position d'installation d'un appareil d'obtention d'image de portée qui obtient l'image de seconde portée, et pour trouver la fonction de transformation sur la base des premières informations d'état d'installation et des secondes informations d'état d'installation (12).
